# EUROPÄISCHE PATENTSCHRIFT

(11) **EP 3 960 605 B1**
(45) Veröffentlichungstag und Bekanntmachung des Hinweises auf die Patenterteilung: **23.07.2025**
(21) Anmeldenummer: 20193888.3
(22) Anmeldetag: 01.09.2020
(51) Int. Cl.: B62K 19/34, B62M 6/55

(54) **ELEKTROFAHRRAD-ANTRIEBSEINHEITS-BEFESTIGUNGSANORDNUNG**
ELECTRIC BICYCLE DRIVE UNIT ATTACHMENT ASSEMBLY
DISPOSITIF DE FIXATION D'UNE UNITÉ D'ENTRAÎNEMENT DE BICYCLETTE ÉLECTRIQUE

(43) Veröffentlichungstag der Anmeldung: 02.03.2022
(73) Patentinhaber: SRAM, LLC, Chicago, IL 60607 (US)
(72) Erfinder: GREVEN, Dietmar, 41460 Neuss (DE); OTZEN, Kai, 41460 Neuss (DE)
(74) Vertreter: terpatent PartGmbB

(56) Entgegenhaltungen:
- EP-A1- 3 686 102
- WO-A1-2022/043182
- DE-A1- 102016 112 778
- DE-A1- 102017 201 617
- DE-A1- 102020 200 385
- JP-A- 2016 064 721

## Beschreibung

Die Erfindung bezieht sich auf eine Elektrofahrrad-Antriebseinheits-Befestigungsanordnung zur Befestigung einer elektrischen Mittelmotor-Antriebseinheit an einem Fahrradrahmen eines Elektrofahrrads.

Unter einem Elektrofahrrad ist vorliegend jeder Fahrradtyp zu verstehen, der eine unterstützende elektrische Antriebseinheit aufweist, die die von einer Fahrerperson in die Tretkurbel eingeleitete humane Antriebsleistung durch eine entsprechende elektromotorische Antriebsleistung ergänzt, soweit dies gewünscht ist. Die vorliegende Erfindung bezieht sich auf eine Befestigungsanordnung für eine sogenannte Mittelmotor-Antriebseinheit, die sowohl die Tretkurbelwelle rotatorisch lagert als auch ein Abtriebselement aufweist, beispielsweise mindestens ein Kettenblatt, das ein Hinterrad des Elektrofahrrads antreibt. Bei einer Mittelmotor-Antriebseinheit können kurzzeitig sehr hohe mechanische Kräfte auf die Antriebseinheit einwirken, die durch die Befestigungsanordnung auf den Fahrradrahmen übertragen werden müssen.

Aus DE 10 2016 112 778 A1 und DE 10 2017 201 617 A1, die alle Merkmale des Präambels des unabhängigen Anspruchs 1 offenbart, sind Befestigungsanordnungen bekannt, bei denen der Fahrradrahmen zwei zueinander parallele vertikale Rahmenflansche aufweist, an denen hierzu korrespondierende vertikale Gehäuseflansche des Antriebseinheits-Gehäuses fixiert sind. Zwar weist diese Befestigungsanordnung eine hohe mechanische Stabilität auf, allerdings wird hierdurch der Körperschall des Antriebseinheits-Gehäuses auch auf den Fahrradrahmen übertragen. Die akustischen Eigenschaften von Elektrofahrrad-Antriebseinheiten stehen jedoch immer mehr im Mittelpunkt von Kaufentscheidungen der Endverbraucher.

Aus den nachveröffentlichten Druckschriften WO 2022/043182 A1 und DE 10 2020 200385 A1 ist jeweils eine Fixierung einer Antriebseinheit an einer Fahrradrahmen-Seitigen Antriebsaufnahme mit Dämpfungsmitteln bekannt.

Aus JP 2016-64721 A ist die Aufhängung eines Verbrennungsmotors an einem Motorad-Rahmen bekannt, bei der ein Ende des Verbrennungsmotors über einen separaten Bügel am Motorrad-Rahmen gehalten wird, wobei zwischen dem unteren Ende des Haltebügels und dem Verbrennungsmotor eine Gummimuffe vorgesehen ist, um die Vibrationsübertragung zu dämpfen.

Aufgabe der Erfindung vor diesem Hintergrund ist es, eine stabile Elektrofahrrad-Antriebseinheits-Befestigungsanordnung mit verbesserten akustischen Eigenschaften zu schaffen.

Diese Aufgabe wird erfindungsgemäß gelöst mit einer Elektrofahrrad-Antriebseinheits-Befestigungsanordnung mit den Merkmalen des Anspruchs 1.

Durch die erfindungsgemäße Elektrofahrrad-Antriebseinheits-Befestigungsanordnung ist die elektrische Mittelmotor-Antriebseinheit an einer Antriebsaufnahme eines Fahrradrahmens schwimmend befestigt, also unter vollständiger Vermeidung einer steifen Verbindung zwischen dem Antriebseinheits-Gehäuse und dem Fahrradrahmen. Die Antriebsaufnahme des Fahrradrahmens weist zwei zueinander parallele rahmenfeste und im Wesentlichen vertikale Rahmenflansche auf. Das Antriebseinheits-Gehäuse weist zwei zueinander parallele und im wesentlichen vertikale Gehäuseflansche auf, die bei montierter Antriebseinheit jeweils proximal, also innenseitig der Rahmenflansche angeordnet sind. Der linke Gehäuseflansch ist an dem linken Rahmenflansch und der rechte Gehäuseflansch ist an dem rechten Rahmenflansch befestigt. Die Antriebseinheit ist also durch zwei Flanschpaarungen an dem Fahrradrahmen befestigt, wobei jede Flanschpaarung jeweils aus einem Rahmenflansch und dem zugeordneten Gehäuseflansch besteht. Der Rahmenflansch und/oder der Gehäuseflansch muss hierbei jeweils nicht notwendigerweise durch einen vertikal in einer Vertikalebene stehenden Steg gebildet sein. Insbesondere kann der Gehäuseflansch auch durch eine Flanschfläche des Gehäusekörpers gebildet sein, die nicht vertikal von der dem einbetten Teil des Antriebsgehäuses absteht.

Beide Flansch-Paarungen weisen jeweils mindestens eine Gummilagerung auf, durch die der Rahmenflansch mit dem zugeordneten Gehäuseflansch schwimmend und gummielastisch verbunden ist, sodass die beiden Gehäuseflansche jeweils nicht unmittelbar an den korrespondierenden Rahmenflanschen anliegen. Zwischen dem Gehäuseflansch und dem Rahmenflansch ist jeweils ein Abstandsspalt von mindestens 0,3 mm gebildet. Unter einer Gummilagerung ist vorliegend nicht notwendigerweise eine Lagerung aus Gummi zu verstehen, sondern eine gummielastische Lagerung, die eine nicht-starre und ausschließlich elastische Verbindung herstellt, durch die eine Körperschall-Übertragung gegenüber einer starren Verbindung in relevantem Umfang vermindert ist.

Die Gummihülse ist in einem im Wesentlichen zylinderförmigen Ringspalt zwischen einer steifen Außenhülse und einer steifen Innenhülse angeordnet. Der Verbund aus der steifen Außenhülse, der Gummihülse und der steifen Innenhülse kann als ein vorgefertigtes Bauteil vorgesehen sein, wobei die Gummihülse mit ihrer Außenumfangsfläche mit der Innenumfangsfläche der Außenhülse und mit ihrer Innenumfangsfläche mit der Außenumfangsfläche der Innenhülse vorzugsweise stoffschlüssig verbunden ist, beispielsweise durch Vulkanisierung. Alternativ und besonders bevorzugt ergänzend kann auch eine formschlüssige Verbindung der jeweiligen Grenzflächen-Paarungen vorgesehen sein. Die Außenhülse und/oder die Innenhülse sind bevorzugt aus Metall gefertigt.

Auch bei größeren Tret- und Antriebs-Kräften wird auf diese Weise sichergestellt, dass kein direkter mechanischer Kontakt hergestellt ist zwischen dem Metall-Antriebsgehäuses und dem Metall-Fahrradrahmen. Auf diese Weise wird eine Übertragung des Körperschalls von dem Antriebsgehäuse auf den Fahrradrahmen vermieden. Die Körperschall-Geräuschemissionen werden in der Summe daher auf diese Weise erheblich begrenzt, sodass die akustischen Eigenschaften des Elektrofahrrads hierdurch erheblich verbessert sind.

Vorzugsweise weist die Gummilagerung eine im Wesentlichen ring- oder zylinderförmige Gummihülse auf, durch die die an der Antriebseinheit auftretenden Tret- und Antriebskräfte im Wesentlichen in radialer Richtung übertragen werden. Die ausreichende Dimensionierung der Gummihülse erfolgt auf einfache Weise durch entsprechende Auslegung der Hülsenlänge, des Hülsendurchmessers sowie der radialen Materialdicke der Gummihülse. Auf diese Weise können auch sehr hohe Kräfte übertragen werden, ohne dass die Antriebseinheit sich im Verhältnis zu dem Fahrradrahmen hierbei nennenswert bewegt. Insbesondere kann auf diese Weise zuverlässig sichergestellt werden, dass der Gehäuseflansch nicht an den korrespondierenden Rahmenflansch anschlägt.

Vorzugsweise sitzt die Außenhülse des Hülsen-Verbundes in einer Durchgangsbohrung des Gehäuseflansches. Der Hülsen-Verbund kann auf diese Weise aus proximaler Richtung, also von der Antriebseinheits-Mitte aus, nach distal in die betreffende Durchgangsbohrung des Gehäuseflansches eingesetzt werden, so dass sie durch ein entsprechendes Befestigungsmittel, beispielsweise einen Schraubbolzen an dem betreffenden distalen Rahmenflansch befestigt werden kann.

Vorzugsweise ist die Innenhülse kraftschlüssig und/oder formschlüssig direkt an dem zugeordneten Rahmenflansch befestigt. Beispielsweise kann die Innenhülse ein Innengewinde aufweisen, in das ein Außengewinde eines Schraubbolzen eingeschraubt ist, der aus distaler Richtung in eine korrespondierende Bolzenöffnung des Rahmenflansches eingesteckt ist. Auf diese Weise kann die Antriebseinheit an dem Fahrradrahmen montiert werden, indem ausschließlich auf bei beiden Flansch-Paarungen jeweils aus distaler Richtung ein Schraubbolzen, beispielsweise eine Gewindeschraube, in die Innenhülse eingeschraubt wird.

Vorzugsweise weist die Gummihülse an ihrem distalen Längsende einen Abstandskragen auf, der axial zwischen der Außenhülse und dem korrespondierenden Rahmenflansch angeordnet ist. Durch den Abstandskragen wird ein konstantes Mindestmaß für den Abstandsspalt zwischen dem Rahmenflansch und dem zugeordneten Gehäuseflansch sichergestellt, und zwar auf beiden und zwar in Bezug auf beide Flansch-Paarungen links und rechts. Hierdurch wird sichergestellt, dass auch bei starken mechanischen Belastungen angesichts der kein unmittelbarer Kontakt auch nur punktuell oder kurzzeitig ein unmittelbarer Kontakt des Rahmenflansch es mit dem zugeordneten Gehäuseflansch auftreten kann.

Vorzugsweise sind an der Innenseite der Außenhülse und an der Außenseite der Innenhülse Formschlussstrukturen vorgesehen, die mit komplementären Formschluss-Strukturen an der Außenseite und der Innenseite der Gummihülse Form schlüssig ineinandergreifen. Die Gummihülse ist also über Formschlussstrukturen praktisch drehfest mit der Innenhülse und der Außenhülse verzahnt. Dies ist insbesondere dann von Bedeutung, wenn die Fixierung der des Hülsen-Verbundes an dem Rahmenflansch und/oder dem Gehäuseflansch über eine Gewindeverbindung erfolgt, durch die während der Montage ein Drehmoment auf den Hülsen-Verbund ausgeübt wird.

Vorzugsweise weist in die Außenhülse an ihrem proximalen Längsende eine Verdrehsicherung-Struktur auf, durch die die Außenhülse verdrehungssicher an dem Antriebseinheits-Gehäuse abgestützt ist. Die Verdrehsicherung-Struktur ist insbesondere dann erforderlich, wenn die korrespondierende Innenhülse der Hülsen-Verbundes über eine einen Gewindebolzen bzw. eine Gewindeschraube an dem Rahmenflansch montiert wird. Durch die Verdrehsicherungs-Struktur wird der Hülsen-Verbund an einem Mitdrehen zusammen mit der Schraubbewegung an einem Mitdrehen während der Montage gehindert.

Im Folgenden wird ein Ausgangsbeispiel der Erfindung anhand der Zeichnungen näher erläutert. Es zeigen:
Figur 1 einen Vertikalschnitt I-I einer Elektrofahrrad-Antriebseinheits-Befestigungsanordnung mit einer Mittelmotor-Antriebseinheit, die an einer fahrradrahmenseitigen Antriebsaufnahme montiert ist,
Figur 2 einen Horizontalschnitt II-II der Elektrofahrrad-Antriebseinheits-Befestigungsanordnung der Figur 1,
Figur 3 die linke Befestigungsanordnung III einschließlich eines 3-teiligen Hülsen-Verbundes der Figur 2 in vergrößerter Darstellung, und
Figur 4 eine Außenhülse und eine Innenhülse des Hülsen-Verbundes der Figur 3.

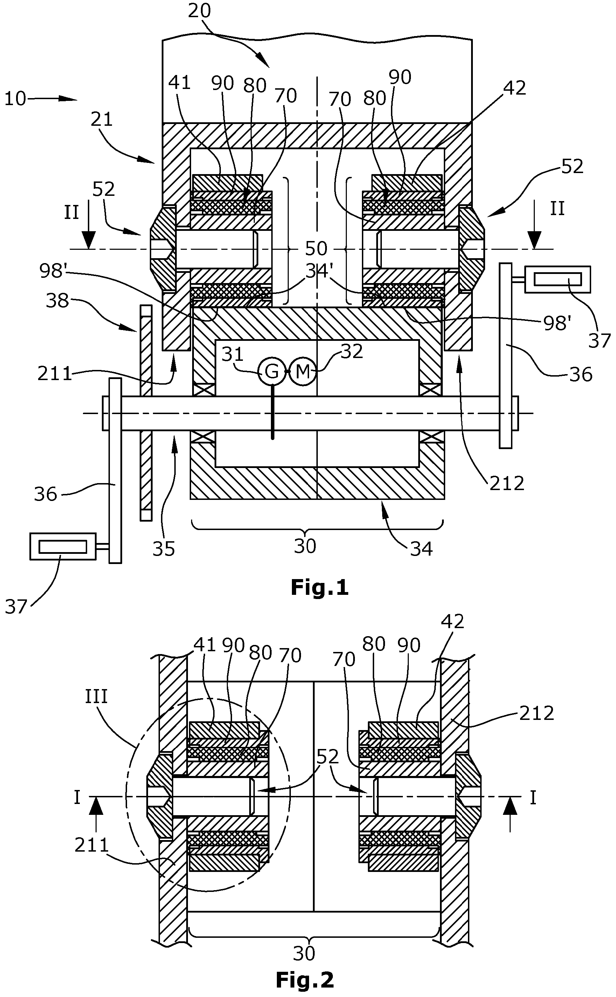

In der Figur 1 ist schematisch ein Elektrofahrrad 10 mit einem Fahrradrahmen 20 und einer Mittelmotor- Antriebseinheit 30 im Vertikalschnitt dargestellt. Die Antriebseinheit 30 ist vorliegend rein unterstützend ausgelegt, und unterstützt im Fahrbetrieb die humane Antriebsleistung einer Fahrerperson.

Von dem Elektrofahrrad 10 ist vorliegend nur ein kurzer Abschnitt eines Rahmen-Unterrohres sowie eine Antriebsaufnahme 21 dargestellt. Die Antriebseinheit 30 weist ein geschlossenes Antriebseinheits-Gehäuse 34 auf, in dem ein elektrischer Antriebsmotor 32 und ein Getriebe 31 angeordnet sind. Das Getriebe 31 kann eine starre Übersetzung aufweisen, kann ein Schaltgetriebe sein oder ein stufenloses Getriebe sein. In dem Antriebseinheits-Gehäuse 34 ist ferner eine in Querrichtung verlaufende Abtriebswelle 35 gelagert, die vorliegend auch die Tretlagerwelle darstellt. Grundsätzlich können die Abtriebswelle und die Tretlagerwelle jedoch auch getrennt voneinander vorgesehen sein, beispielsweise konzentrisch zueinander angeordnet sein. An den beiden Längsenden der Abtriebswelle 35 sind eine linke und eine rechte Tretkurbel 36 und an deren Enden jeweils Tretpedale 37 vorgesehen. An der Abtriebswelle 35 ist drehfest ein als Zahnrad mit mehr als 20 Zähnen ausgebildetes Abtriebselement 38 vorgesehen, das über einen Kettentrieb ein Hinterrad-Ritzel eines Hinterrades des Fahrrads 10 antreibt.

In den Figuren 1-3 sind zwei Befestigungsanordnungen 50 dargestellt, durch die die Antriebseinheit 30 an der Antriebsaufnahme 21 des Fahrradrahmens 20 schwimmend befestigt ist. Die Antriebsaufnahme 21 weist zwei zueinander parallele rahmenfeste und jeweils in einer Vertikalebene angeordnete Rahmenflansche 211,212 auf, sodass hierdurch eine klammerartige, nach unten offene und im Querschnitt U-förmige Aufnahme gebildet ist. An den beiden Rahmenflanschen 211,212 sind hierzu parallele und ebenfalls in einer Vertikalebene stehende Gehäuseflansche 41,42 des Antriebsgehäuses 34 befestigt, die von dem geschlossenen Antriebsgehäuse 34 vertikal nach oben abragen.

Grundsätzlich können die Gehäuseflansche jedoch auch in das eigentliche Antriebsgehäuses 34 integriert sein.

Der linke Rahmenflansch 211 ist durch eine Gummilagerung 80 an dem linken Gehäuseflansch 41 und der rechte Rahmenflansch 212 durch eine identische Gummilagerung 80 an dem rechten Gehäuseflansch 42 gummielastisch befestigt. Die beiden Gehäuseflansche 41,42 weisen jeweils eine zylindrische Durchgangsbohrung 49 auf, in der ein Hülsen-Verbund 60 aus proximaler Richtung eingesteckt ist. Der Hülsen-Verbund 60 besteht im Wesentlichen aus einer steifen Außenhülse 90, die von einem Metall-Hülsenkörper 92 gebildet ist, einer steifen Innenhülse 70, die von einem Metall-Hülsenkörper 72 gebildet ist, und einer die Gummilagerung 80 im Wesentlichen bildenden und im Wesentlichen zylinderförmigen elastischen Gummihülse 82. Die Gummihülse 82 füllt einen zylinderförmigen Ringspalt 100 zwischen der im wesentlichen zylindrischen Innenumfangsfläche der Außenhülse 90 und der im Wesentlichen zylindrischen Außenumfangsfläche der Innenhülse 70. Die Gummihülse 82 ist mit der Außenhülse 90 und der Innenhülse 70 jeweils stoffschlüssig verklebt oder vulkanisiert.

Der Außenhülsen-Außenkörper ist an seiner Außenumfangsfläche 99 im Wesentlichen zylindrisch ausgebildet, und ist mit seiner Außenumfangsfläche 99 klemmend eingesteckt in die zylindrische Innenumfangsfläche der Durchgangsbohrung 49.

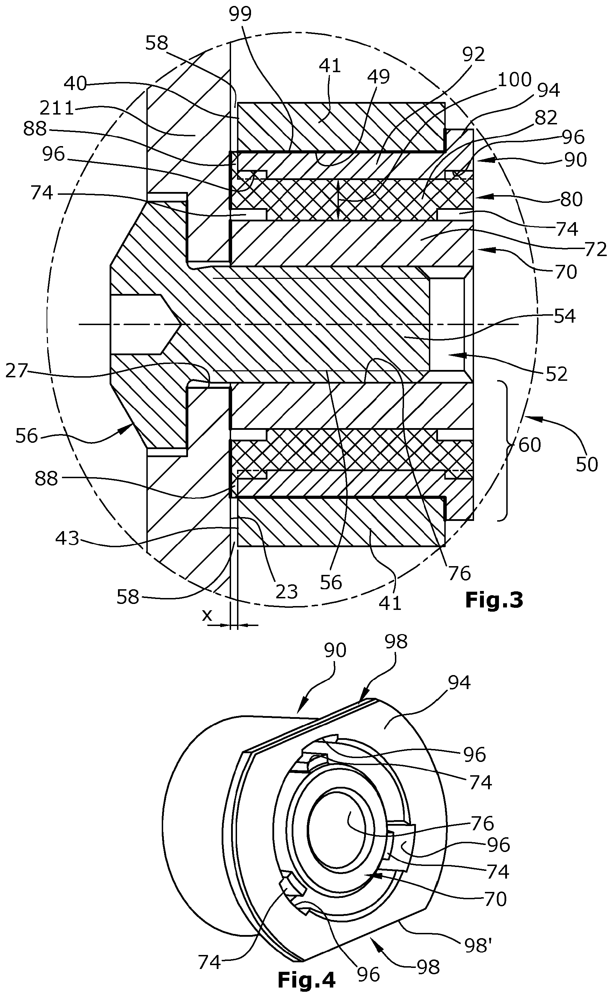

In der Figur 4 ist der Hülsen-Verbund 60 ohne die Gummihülse 82 dargestellt. Insbesondere in der Figur 4 ist gut erkennbar, dass die Außenhülse 90 außenseitig an ihrem proximalen Längsende einen in einer Radialebene stehenden Anschlag-Ringflansch 94 aufweist, der in Form von zwei kreissehnenförmigen linearen Abflachungen 98', deren Sehnenlinien parallel zueinander sind, eine Verdrehsicherungs-Struktur 98 aufweist. Die Außenhülse 90 und damit der gesamte Hülsen-Verbund 60 ist im an der Antriebseinheit 30 vormontierten und im endmontierten Zustand rotatorisch blockiert, da die Abflachung 98' in Zusammenwirken mit einer korrespondierenden ebenen Gegenfläche 34' des Antriebseinheits-Gehäuses 34 einen rotatorischen Formschluss herstellt, wie beispielsweise in der Figur 1 erkennbar ist.

An der Innenseite des Außenhülsen-Hülsenkörpers 92 sind innenseitig an den beiden Längsenden des Hülsenkörpers 92 jeweils drei Formschluss-Taschen 96 vorgesehen, die rotatorisch korrespondieren mit ähnlichen Formschluss-Stegen 74 an der Außenseite des Innenhülsen-Hülsenkörpers 72. Die insgesamt sechs Formschluss-Taschen 96 und insgesamt sechs Formschluss-Stege 74 greifen mit entsprechenden komplementären Formschluss-Stegen und -Taschen der Gummihülse 82 formschlüssig ineinander, sodass auf diese Weise auch bei hohen Drehmomenten während der Montage eine zuverlässig drehfeste Verbindung zwischen der Innenhülse 70 und der Außenhülse 90 sichergestellt ist.

Die Innenhülse 70 weist innenseitig ein Innengewinde 76 auf, in das ein Außengewinde 56 eines Schraubbolzens 52 von proximal eingeschraubt ist. Der Schraubbolzen 52 weist einen zylindrischen Gewindeschaft 54 und einen Bolzenkopf 56 auf. Der zugeordnete Rahmenflansch 211,212 weist eine gestufte Durchgangsbohrung 27 auf, durch die bei der Montage der Schraubbolzen 52 hindurch gesteckt und mit seinem das Außengewinde 56 aufweisenden Gewindeschaft 54 in das Innenhülsen-Innengewinde 76 eingeschraubt wird bzw. ist. Auf diese Weise ist die Innenhülse 70 kraftschlüssig an dem Rahmenflansch 211,212 befestigt.

Wie insbesondere in der Figur 3 erkennbar ist, weist die Gummihülse 82 an ihrem distalen Längsende einen nach radial außen in einer Radialebene stehenden Abstandskragen 88 auf, der im montierten Zustand und nur im Bereich der Außenhülse 90 einen Axial-Zwischenraum 58 zwischen der distalen Stirnfläche 43 der Außenhülse 90 und der proximalen Flanschfläche 23 des zugeordneten Rahmenflansches 211,212 ausfüllt. Der Abstandskragen 88 stellt hierdurch im statischen Fall einen Abstandsspalt x von ca. 1,0 mm zwischen dem Gehäuseflansch 41,42 und dem zugeordneten korrespondierenden Rahmenflansch 211,212 sicher. Da sowohl links als auch rechts mindestens eine Befestigungsanordnung 50 vorgesehen ist, wird die Antriebseinheit 30 auf diese Weise zwischen den beiden Rahmenflanschen 211,212 schwimmend zentriert.

In dem dynamischen Fall, also im Betrieb, wird hierdurch stets ein minimaler Abstandsspalt sichergestellt, der stets so groß ist, dass die Gehäuseflansche 41,42 nicht an den zugeordneten Rahmenflanschen 211,212 anschlagen. Hierdurch wird die Übertragung des Körperschalls des Antriebseinheits-Gehäuses 34 auf den Fahrradrahmen 20 verhindert, sodass die von der Antriebseinheit 30 verursachten Geräuschemissionen insgesamt verringert sind gegenüber einer Befestigungsanordnung mit starrer Verbindung der Antriebseinheit mit dem Fahrradrahmen.

## Patentansprüche

1. Eine Elektrofahrrad-Antriebseinheits-Befestigungsanordnung (50), durch die eine elektrische Mittelmotor-Antriebseinheit (30) an einer Antriebsaufnahme (21) eines Fahrradrahmens (20) schwimmend befestigt ist,
wobei die Mittelmotor-Antriebseinheit (30) mit einem Antriebseinheits-Gehäuse (34), in dem eine in Querrichtung verlaufende Abtriebswelle gelagert ist, und die eine Tretlagerwelle aufweist,
wobei die Antriebsaufnahme (21) zwei zueinander parallele rahmenfeste und vertikale Rahmenflansche (211,212) aufweist, wobei ein Antriebseinheits-Gehäuse (34) zwei zueinander parallele und vertikale Gehäuseflansche (41,42) aufweist,
wobei der eine Gehäuseflansch (41) an dem einen Rahmenflansch (211) und der andere Gehäuseflansch (42) an dem anderen Rahmenflansch (212) befestigt ist und jeweils eine Flansch-Paarung bilden, und wobei die Gehäuseflansche (41, 42) jeweils proximal der Rahmenflansche (211, 212) angeordnet sind, sodass eine Klammerartige, nach unten offene und im Querschnitt U-förmige Antriebsaufnahme (21) gebildet ist,
**dadurch gekennzeichnet, dass**
beide Flansch-Paarungen jeweils mindestens eine Gummilagerung (80) aufweisen, durch die der Rahmenflansch (211,212) mit dem zugeordneten Gehäuseflansch (41,42) schwimmend und gummielastisch verbunden ist, so dass die Gehäuseflansche (41,42) jeweils nicht unmittelbar an den korrespondierenden Rahmenflanschen (211,212) anliegen, sondern durch einen Abstandsspalt (58) mit einem Spaltmaß X von mindestens 0,3 mm von den korrespondierenden Rahmenflanschen (211,212) beabstandet sind, und
die Gummihülse (82) in einem im wesentlichen zylinderförmigen Ringspalt (100) zwischen einer steifen Außenhülse (90) und einer steifen Innenhülse (70) angeordnet ist.

2. Die Elektrofahrrad-Antriebseinheits-Befestigungsanordnung (50) nach Anspruch 1, wobei die Gummilagerung (80) eine im Wesentlichen ring- oder zylinderförmige Gummihülse (82) aufweist.

3. Die Elektrofahrrad-Antriebseinheits-Befestigungsanordnung (50) nach einem der vorangegangenen Ansprüche, wobei die Außenhülse (90) in einer Durchgangsbohrung (49) des Gehäuseflansches (41,42) sitzt.

4. Die Elektrofahrrad-Antriebseinheits-Befestigungsanordnung (50) nach einem der vorangegangenen Ansprüche, wobei die Innenhülse (70) kraftschlüssig und/oder formschlüssig direkt an dem Rahmenflansch (211,212) steif befestigt ist.

5. die Elektrofahrrad-Antriebseinheits-Befestigungsanordnung (50) nach Anspruch 4, wobei die Innenhülse (70) ein Innengewinde (76) aufweist, in das ein Außengewinde (56) eines Schraubbolzens (52) eingeschraubt ist, der aus distaler Richtung in eine Bolzenöffnung (27) des Rahmenflansches (211,212) eingesteckt ist.

6. Die Elektrofahrrad-Antriebseinheits-Befestigungsanordnung (50) nach einem der vorangegangenen Ansprüche, wobei die Gummihülse (82) einen Abstandskragen (88) aufweist, der axial zwischen der Außenhülse (90) und dem korrespondierenden Rahmenflansch (211,212) angeordnet ist.

7. Die Elektrofahrrad-Antriebseinheits-Befestigungsanordnung (50) nach einem der vorangegangenen Ansprüche wobei an der Innenseite der Außenhülse (90) und an der Außenseite der Innenhülse (70) Formschluss-Strukturen vorgesehen sind, die mit komplementären Formschluss-Strukturen an der Außenseite und der Innenseite der Gummihülse (82) formschlüssig ineinandergreifen.

8. Die Elektrofahrrad-Antriebseinheits-Befestigungsanordnung (50) nach einem der vorangegangenen Ansprüche, wobei die Außenhülse (90) an ihrem proximalen Längsende eine Verdrehsicherungs-Struktur (98) aufweist, durch die die Außenhülse (90) verdrehungssicher an dem Antriebseinheits-Gehäuse (34) abgestützt ist.

## Claims

1. An electric bicycle drive unit mounting arrangement (50) by which an electric mid-motor drive unit (30) is floatingly mounted to a drive receptacle (21) of a bicycle frame (20),
the mid-motor drive unit (30) having a drive unit housing (34) in which an output shaft extending in the transverse direction is mounted and which has a bottom bracket shaft,
the drive receptacle (21) having two mutually parallel frame-fixed and vertical frame flanges (211, 212),
a drive unit housing (34) having two mutually parallel and vertical housing flanges (41, 42),
one housing flange (41) being mounted to the one frame flange (211) and the other housing flange (42) being mounted to the other frame flange (212) and each defining a flange pairing, and the housing flanges (41, 42) each being arranged proximally of the frame flanges (211, 212) so that a clamp-like drive receptacle (21) is defined which is downwardly open and U-shaped in cross-section,
**characterized in that**
both flange pairings each have at least one rubber bearing (80) by which the frame flange (211, 212) is floatingly and rubber-elastically connected to the associated housing flange (41, 42) so that the housing flanges (41, 42) each do not rest directly against the corresponding frame flanges (211, 212) but are spaced apart from the corresponding frame flanges (211, 212) by a spacing gap (58) having a gap dimension X of at least 0.3 mm, and
the rubber sleeve (82) is arranged in a substantially cylindrical annular gap (100) between a rigid outer sleeve (90) and a rigid inner sleeve (70).

2. The electric bicycle drive unit mounting arrangement (50) according to claim 1, wherein the rubber bearing (80) has a substantially annular or cylindrical rubber sleeve (82).

3. The electric bicycle drive unit mounting arrangement (50) according to one of the preceding claims, wherein the outer sleeve (90) is seated in a through bore (49) of the housing flange (41, 42).

4. The electric bicycle drive unit mounting arrangement (50) according to one of the preceding claims, wherein the inner sleeve (70) is rigidly mounted directly to the frame flange (211, 212) in a force-fitting and/or form-fitting manner.

5. The electric bicycle drive unit mounting arrangement (50) according to claim 4, wherein the inner sleeve (70) has an internal thread (76) into which an external thread (56) of a screw bolt (52) is screwed, which is inserted from the distal direction into a bolt opening (27) of the frame flange (211, 212).

6. The electric bicycle drive unit mounting arrangement (50) according to one of the preceding claims, wherein the rubber sleeve (82) has a spacing collar (88) which is arranged axially between the outer sleeve (90) and the corresponding frame flange (211, 212).

7. The electric bicycle drive unit mounting arrangement (50) according to one of the preceding claims, wherein form-fitting structures are provided on the inner side of the outer sleeve (90) and on the outer side of the inner sleeve (70), which form-fitting structures engage in a form-fitting manner with complementary form-fitting structures on the outer side and the inner side of the rubber sleeve (82).

8. The electric bicycle drive unit mounting arrangement (50) according to one of the preceding claims, wherein the outer sleeve (90) has at its proximal longitudinal end a rotation-preventing structure (98) by means of which the outer sleeve (90) is supported in a rotation-preventing manner on the drive unit housing (34).

## Revendications

1. Un arrangement de fixation d'unité d'entraînement de bicyclette électrique (50), par lequel une unité d'entraînement de moteur moyenne électrique (30) est fixée de manière flottante à un logement d'entraînement (21) d'un cadre de bicyclette (20),
dans lequel l'unité d'entraînement de moteur moyenne (30) comporte un boîtier d'unité d'entraînement (34), dans lequel un arbre de sortie s'étendant dans la direction transversale est supporté, et qui comporte un arbre de pédalier,
dans lequel le logement d'entraînement (21) comporte deux brides (211, 212) bien fixé au cadre, verticales et parallèles l'une à l'autre,
dans lequel un boîtier d'unité d'entraînement (34) comporte deux brides de boitier (41, 42) verticales et parallèles l'une à l'autre,
dans lequel l'une des brides de boitier (41) est fixée à l'une des brides de cadre (211) et l'autre bride de boitier (42) est fixée à l'autre bride de cadre (212) et forment respectivement une paire de brides, et dans lequel les brides de boitier (41, 42) sont disposées respectivement à l'intérieur des brides de cadre (211, 212), de sorte que le logement d'entraînement (21) est formé en forme d'agrafe et en forme de U en section transversale, **caractérisé en ce que**
les deux paires de brides comportent respectivement au moins un palier en caoutchouc (80), par lequel la bride de cadre (211, 212) est reliée de manière flottante et élastique à la bride de boitier (41, 42) correspondante, de sorte que les brides de boitier (41, 42) ne sont respectivement pas directement adjacentes aux brides de cadre (211, 212) correspondantes, mais sont espacées des les brides de cadre (211, 212) correspondantes par une fente d'espacement (58) ayant une dimension de fente X d'au moins 0,3 mm, et
la douille en caoutchouc (82) est disposée dans une fente annulaire (100) substantiellement cylindrique entre une douille extérieure rigide (90) et une douille intérieure rigide (70).

2. L'arrangement de fixation d'unité d'entraînement de bicyclette électrique (50) selon la revendication 1, dans lequel le palier en caoutchouc (80) comporte une douille en caoutchouc (82) substantiellement annulaire ou cylindrique.

3. L'arrangement de fixation d'unité d'entraînement de bicyclette électrique (50) selon l'une quelconque des revendications précédentes, dans lequel la douille extérieure (90) est logée dans un alésage traversant (49) des brides de boitier (41, 42).

4. L'arrangement de fixation d'unité d'entraînement de bicyclette électrique (50) selon l'une quelconque des revendications précédentes, dans lequel la douille intérieure (70) est fixée de manière rigide par adhérence et/ou par complémentarité de forme directement à la bride de cadre (211, 212).

5. L'arrangement de fixation d'unité d'entraînement de bicyclette électrique (50) selon la revendication 4, dans lequel la douille intérieure (70) comporte un filetage intérieur (76), dans lequel un filetage extérieur (56) d'un boulon fileté (52) est vissé, qui est inséré depuis la direction distale dans une ouverture de boulon (27) des brides de cadre (211, 212).

6. L'arrangement de fixation d'unité d'entraînement de bicyclette électrique (50) selon l'une quelconque des revendications précédentes, dans lequel la douille en caoutchouc (82) comporte une collerette d'espacement (88), qui est disposée axialement entre la douille extérieure (90) et la bride de cadre (211, 212) correspondante.

7. L'arrangement de fixation d'unité d'entraînement de bicyclette électrique (50) selon l'une quelconque des revendications précédentes, dans lequel des structures de complémentarité de forme sont prévues à l'intérieur de la douille extérieure (90) et à l'extérieur de la douille intérieure (70), qui s'engagent par complémentarité de forme avec des structures de complémentarité de forme complémentaires à l'extérieur et à l'intérieur de la douille en caoutchouc (82).

8. L'arrangement de fixation d'unité d'entraînement de bicyclette électrique (50) selon l'une quelconque des revendications précédentes, dans lequel la douille extérieure (90) comporte à son extrémité longitudinale proximale une structure anti-rotation (98), par laquelle la douille extérieure (90) est supportée de manière rotative sur le boîtier d'unité d'entraînement (34).
